# EUROPÄISCHE PATENTSCHRIFT

(11) **EP 3 438 518 B1**
(45) Veröffentlichungstag und Bekanntmachung des Hinweises auf die Patenterteilung: **31.08.2022**
(21) Anmeldenummer: 18183177.7
(22) Anmeldetag: 12.07.2018
(51) Int. Cl.: F16N 99/00, F16C 41/00, F16C 33/66, F16N 7/38, F16N 29/04

(54) **SCHMIERSYSTEM MIT EINEM ENERGIEERZEUGUNGSELEMENT**
LUBRICATION SYSTEM WITH A POWER GENERATION ELEMENT
SYSTÈME DE LUBRIFICATION DOTÉ D'UN ÉLÉMENT DE PRODUCTION D'ÉNERGIE

(30) Priorität: 04.08.2017 DE 102017213588
(43) Veröffentlichungstag der Anmeldung: 06.02.2019
(73) Patentinhaber: SKF Lubrication Systems Germany GmbH, 69190 Walldorf (DE)
(72) Erfinder: Kreutzkämper, Jürgen, 74915 Waibstadt-Daisbach (DE); Schmidt, Holger, 14532 Klein-Manchow (DE); Schoenfeld, Andreas, 68789 Sankt Leon-Rot (DE)
(74) Vertreter: Schonecke, Mitja

(56) Entgegenhaltungen:
- EP-A1- 2 073 343
- EP-A1- 2 757 278
- EP-A2- 1 292 831
- WO-A1-2016/176308
- DE-A1-102005 015 948
- DE-A1-102011 082 270
- DE-A1-102015 111 833
- DE-A1-102017 101 312
- DE-U1-202017 102 519
- US-A1- 2010 322 543

## Beschreibung

Die vorliegende Erfindung betrifft ein Schmiersystem zum Versorgen mindestens einer Schmierstelle mit Schmierstoff, wobei das Schmiersystem mindestens eine Schmierstoffversorgungsleitung und mindestens eine Schmiersystemkomponente aufweist, die mit der Schmierstoffleitung in Verbindung steht.

Aus dem Stand der Technik sind vielfältige Schmiersysteme bekannt, mit denen Schmierstoff an zu schmierende Stellen, beispielsweise an Lager, geliefert wird. Dabei umfasst das Schmiersystem üblicherweise eine Schmierstoffpumpe, beispielsweise eine Kolbenpumpe und eine Schmierstoffverteileinrichtung, wobei Schmierstoffpumpe und Schmierstoffverteileinrichtung über eine Schmierstoffleitung miteinander verbunden sind. Die Schmierstoffverteileinrichtung wiederum wirkt mit der zu schmierenden Stelle zusammen und versorgt die zu schmierende Stelle üblicherweise mit einer zugemessenen Menge an Schmierstoff. Die DE102017101312 A1 offenbart ein bekanntes Schmiersystem.

Weiterhin ist in dem Schmiersystem eine Vielzahl von Sensoren angeordnet, die den Betrieb der Schmierstoffpumpe, die Temperatur und die Menge der geförderten Schmierstoffmenge oder auch die Viskosität des Schmierstoffs steuern, überwachen oder prüfen. Diese und andere Bauteile des Schmiersystems, wie beispielsweise Sensoren oder Ventile, benötigen Energie, die üblicherweise über im Schmiersystem bereitgestellte Batterien oder eine zentrale Stromversorgung bereitgestellt wird.

Diese bekannte Energieversorgung erfordert entweder eine Vielzahl von einzubauenden Batterien, was einen sehr großen Platzbedarf hat, oder eine Vielzahl von Kabeln, die zusätzlich in dem Schmiersystem verlaufen müssen, was zum einen teuer und zum anderen konstruktionstechnisch aufwendig ist.

Aufgabe vorliegender Erfindung ist es deshalb, die bekannte Energieversorgung im Schmiersystem zu verbessern.

Diese Aufgabe wird durch ein Schmiersystem gemäß Patentanspruch 1 gelöst.

Im Folgenden wird ein Schmiersystem zum Versorgen mindestens einer Schmierstelle mit Schmierstoff vorgeschlagen, wobei das Schmiersystem mindestens eine Schmierstoffversorgungsleitung und mindestens eine Schmiersystemkomponente aufweist, die miteinander in Verbindung stehen.

Unter einer Schmiersystemkomponente in diesem Zusammenhang versteht man alle in das Schmiersystem einbaubaren Elemente und alle funktionell dem Schmiersystem zugeordneten Komponenten. Beispielsweise kann eine Schmiersystemkomponente eine Schmierstofffördervorrichtung wie beispielsweise eine Schmierstoffpumpe, oder ein Schmierstoffverteiler, wie beispielsweise ein Progressivverteiler, Einleitungs-, Zweileitungs- oder Mehrleitungsverteiler, aber auch eine Schmierstoffdosiereinrichtung, wie beispielsweise ein Mengenbegrenzer oder eine Dosiereinheit, oder allgemein ein Ventil sein. Weiterhin kann eine Schmiersystemkomponente auch ein Sensor oder eine Überwachungseinheit sein, wie beispielsweise ein Druckschalter oder Ähnliches. Diese Sensoren oder Überwachungseinheiten können direkt in dem Schmiersystem als eigenständige Elemente vorgesehen sein, es ist jedoch auch möglich, dass ein Sensor oder eine Überwachungseinheit integral mit einer der Schmiersystemkomponenten ausgebildet ist. Üblicherweise steuern, überwachen oder prüfen diese Sensoren oder Überwachungseinheiten Erfassungsgrößen im Schmiersystem, wie beispielsweise Druck, Temperatur, Menge oder Viskosität des geförderten Schmierstoffs.

Weiterhin kann eine Schmiersystemkomponente auch ein Kommunikationsmittel, wie beispielsweise eine Signalübertragungsvorrichtung sein, mit der beispielsweise von den Sensoren detektierte Erfassungsgrößen einem Steuergerät oder einer Bedienperson bereitgestellt werden oder von ihm/ihr empfangen werden.

Im Folgenden wird somit unter dem Begriff Signalübertragungsvorrichtung eine Vorrichtung subsummiert, die Signale sowohl empfangen als auch senden, oder Signale nur senden, oder Signale nur empfangen kann.

Gemein ist all diesen Schmiersystemkomponenten, dass sie mit Energie versorgt werden müssen.

Die Erfinder haben weiterhin erkannt, dass eine Vielzahl der Schmiersystemkomponenten weiterhin sich bewegende Elemente, wie beispielsweise Kolben, aufweisen, und dass die oftmals pulsierende Förderung von Schmierstoff selbst eine Bewegung in dem Schmiersystem darstellt. Diese Bewegung kann erfindungsgemäß ausgenutzt werden, um mit Hilfe von Energieerzeugungselementen, die mit dem sich bewegenden Element zusammenwirken, Energie zu erzeugen, die wiederum in dem Schmiersystem bzw. von den Komponenten des Schmiersystems verwenden werden kann. Diese Komponente kann beispielsweise eine direkt im Schmiersystem eingebaute Komponente sein, wie ein zu bestromendes Ventil, es ist jedoch auch möglich, mit der erzeugten Energie dem Schmiersystem funktionell zugeordnete Komponenten, beispielsweise Sensoren, wie beispielsweise einen Temperatursensor oder einen Schwingungssensor, oder ein Signalübertragungsvorrichtung zu bestromen, die beispielsweise die von den Sensoren detektierten Erfassungsgrößen einem Steuergerät oder Benutzer übermitteln.

Dabei kann erfindungsgemäß das sich bewegende Element ein Kolben sein oder einem Kolben zugeordnet sein, und/oder eine Membran sein oder einer Membran zugeordnet sein. Es kann alternativ oder zusätzlich auch ein sich elastisch ausdehnender oder zusammenziehender Schlauch einer Schmierstoffleitung sein, der die pulsierende Bewegung bei der Förderung des Schmierstoffs ausnutzt.

Gemäß einem vorteilhaften Ausführungsbeispiel ist das Energieerzeugungselement ein Piezoelement und/oder ein induktives Element. Dabei erzeugt das Piezoelement elektrische Energie bei einer Verformung, die über das bewegende Element bereitgestellt werden kann, während das induktive Element eine Stromerzeugung mittels Spulen bereitstellt, die relativ zueinander bewegt werden.

Wie oben erwähnt, kann ein Energieverbraucher ein Sensorelement sein, das für eine Energieversorgung mittels Energieerzeugungselement prädestiniert ist, da Sensoren an vielen Stellen des Schmiersystems eingebaut werden müssen, die oftmals schwer zugänglich sind, oder bei denen ein Bauraum für eine zusätzliche Batterie nicht vorhanden ist.

Dabei kann die Energieversorgung so ausgestaltet sein, dass durch das Energieversorgungselement das Sensorelement insgesamt befähigt ist, mindestens eine Erfassungsgröße, insbesondere eine Eigenschaft des Schmiersystems zu detektieren. Es ist jedoch auch möglich, nur einen Teil des Sensors, beispielsweise einen Messfühler der Signalübertragungsvorrichtung, mit Energie zu versorgen. Dabei kann das Energieerzeugungselement derart mit dem Sensorelement zusammenwirken, dass die Erfassungsgröße kontinuierlich überwacht bzw. detektiert wird, es ist jedoch auch möglich, die Erfassungsgröße diskontinuierlich, z.B. nur unter bestimmten Bedingungen oder Zeitpunkten zu detektieren.

Weiterhin kann dem Energieerzeugungselement mindestens eine Energiespeichereinheit zugeordnet sein, in der Energie vom Energieerzeugungselement speicherbar ist. Diese Energiespeichereinheit ist insbesondere dann vorteilhaft, wenn mit dem Energieerzeugungselement nur wenig, oder nicht ausreichend Energie für eine kontinuierliche Bestromung des mit Energie zu versorgenden Elements bereitgestellt werden kann. Ebenfalls ist eine Energiespeichereinheit vorteilhaft, wenn das die Energie verbrauchende Element nur ab und zu mit Energie versorgt werden muss. Vorteilhafterweise ist eine derartige Energiespeichereinheit beispielsweise ein Akku.

Gemäß einem weiteren vorteilhaften Ausführungsbeispiel ist die Energiespeichervorrichtung mit mindestens einer Schmiersystemkomponente und/oder mit mindestens einem Sensorelement verbunden, um die Schmiersystemkomponente und/oder das Sensorelement mit Energie zu versorgen.

Neben Sensorelementen sind insbesondere Signalübertragungsvorrichtungen als Energieverbraucher bevorzugt. So weist das Schmiersystem mindestens eine Signalübertragungsvorrichtung auf, die dazu ausgelegt ist, drahtlos ein von einer Schmiersystemkomponente bereitgestelltes Signal zu übermitteln und/oder zu empfangen, wobei die Signalübertragungsvorrichtung energetisch mittels der von der Energieerzeugungsvorrichtung erzeugten Energie versorgt wird. Bauteile, die selbst nicht elektrisch betrieben werden müssen, aber die Erfassungsgrößen an eine zentrale Steuereinheit übermitteln und/oder von ihnen empfangen sollen, sind üblicherweise mit Signalübertragungsvorrichtungen ausgestattet, die bestromt werden müssen. Für diese Vorrichtungen kann zwar eine separate Batterie oder eine Anbindung an eine zentrale Stromversorgung möglich sein, dies erfordert aber eine weitere Verkabelung oder eine Bereitstellung von Bauraum, was das Schmiersystem vergrößert und verkompliziert. Durch die Energieversorgung mittels des Energieerzeugungselements können die im System erfassten Signale einfach an eine zentrale Steuereinheit übertragen werden, ohne dass zusätzlicher Bauraum oder eine komplexe Verkabelung bereitgestellt werden muss.

Dabei kann die Signalübertragungsvorrichtung die Signale kontinuierlich oder diskontinuierlich an eine Steuereinheit übermitteln oder von ihr empfangen. Beispielsweise wird von der Signalübertragungsvorrichtung ein von der Sensoreinheit detektiertes Signal übermittelt, wobei die Signalübertragungsvorrichtung und/oder das Sensorelement mit Energie von dem Energieerzeugungselement versorgt werden.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigt:

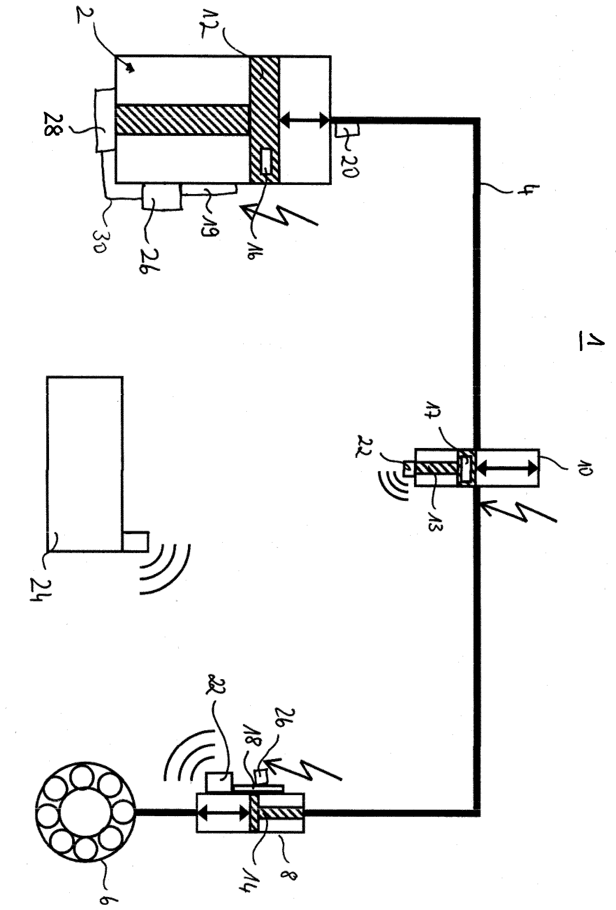

- Fig. 1:: Eine schematische Darstellung eines ersten bevorzugten Ausführungsbeispiels eines erfindungsgemäßen Schmiersystems.

Im Folgenden werden gleiche oder funktionell gleichwirkende Elemente mit denselben Bezugszeichen gekennzeichnet.

Figur 1 zeigt schematisch ein Schmiersystem 1 mit einer Schmierstofffördereinrichtung 2, die mit einer Schmierstoffleitung 4 verbunden ist, um Schmierstoff zu einer zu schmierenden Stelle 6, die hier als Lager dargestellt ist, zu fördern. Um dem Lager eine genau zugemessene Menge an Schmierstoff zu übergeben bzw. allgemein Schmierstoff an das Lager zu verteilen, ist weiterhin eine Schmierstoffverteilvorrichtung 8 vorgesehen, die stromauf des Lagers 6 angeordnet ist. Die Schmierstoffverteilvorrichtung kann beispielsweise ein Einleitungsverteiler oder Progressivverteiler sein. Wie weiter Figur 1 zu entnehmen ist, ist an der Schmierstoffleitung 4 weiterhin eine Sensoreinheit 10 vorgesehen, die beispielsweise einen Schmiermittelfluss durch die Leitung 4 oder dessen Temperatur oder Viskosität überwacht. In dem in Figur 1 dargestellten Ausführungsbeispiel ist die Sensoreinheit 10 ein Druckschalter, der den Druck des in der Schmierstoffleitung 4 transportierten Schmierstoffs misst.

Wie weiterhin in Figur 1 schematisch dargestellt, weist die Schmierstofffördereinrichtung 2, die Schmierstoffverteilvorrichtung 8 oder die Sensoreinheit Kolben 12, 13, 14 auf, die für eine Schmiermittelverteilung bzw. -förderung oder -zumessung sorgen. Diese Kolben 12, 13, 14 stellen beispielhaft sich bewegende Elemente dar. Die sich bewegenden Elemente, hier die Kolben 12, 13, 14, wirken weiterhin mit Energieerzeugungselementen 16, 17, 18, 19 zusammen, wobei schematisch am Schmierstoffverteilelement 8 ein induktives Element 18 angeordnet ist, während an der Schmierstofffördereinrichtung 2 und am Sensor 10 ein Piezoelement 16, 17 vorgesehen ist. Dabei können die Komponenten 2, 4, 8, 10 des Schmiersystems nicht nur eine Art Energieerzeugungselement aufweisen, sondern es ist auch möglich, wie beispielsweise bei der Schmierstofffördereinrichtung 2 gezeigt, unterschiedliche Energieerzeugungselemente 16, 19 an einer Komponente vorzusehen. So kann beispielsweise an der Schmierstofffördervorrichtung 2 weiterhin noch ein induktives Energieerzeugungselement 19 vorgesehen sein.

Diese Energieerzeugungselemente 16, 17, 18, 19 wirken auf bekannte Weise, wobei die Piezoelemente 16, 17 elektrische Energie aus einer Verformung des Elements gewinnen, während die induktiven Elemente 18, 19 Strom über zwei zueinander bewegte Spulen erzeugen. Diese Energie erzeugende Elemente wirken mit den sich bewegenden Elementen zusammen, um Energie zu erzeugen, die in dem Schmiersystem 1 zur Verwendung bereitgestellt wird. Die Energieerzeugung ist mittels des Symbols für Strom illustriert.

Diese Energie kann beispielsweise einem an einem der Komponenten angebrachten Sensorelement 20 bereitgestellt werden, so dass dieses befähigt ist, eine Erfassungsgröße aufzunehmen, zu detektieren, oder zu überwachen. Alternativ oder zusätzlich kann die Energie auch beispielsweise einer Signalübertragungsvorrichtung 22 bereitgestellt werden, die in dem illustrierten Ausführungsbeispiel als drahtlose Signalübertragungsvorrichtung 22 ausgebildet ist. Mittels dieser drahtlosen Signalübertragungsvorrichtung 22 kann beispielsweise eine Erfassungsgröße des Sensors 10 an ein entfernt angeordnetes Steuergerät 24 oder an einen entfernt angeordneten Benutzer übertragen werden. Alternativ oder zusätzlich kann auch von dem Steuergerät 24 ein Signal ausgegeben werden, das beispielsweise von der Signalübertragungsvorrichtung 22 der Schmierstoffverteilvorrichtung 8 empfangen wird, um die an das Lager 6 abzugebende Schmierstoffmenge zu steuern.

Weiterhin kann in dem Schmiersystem 1 eine Energiespeichereinheit 26 vorgesehen sein, die beispielweise mit dem Energieerzeugungselement 18 bzw. 19 zusammenwirkt, um Energie für eine spätere oder energiereiche Anwendung zu speichern. So kann beispielsweise über die gespeicherte Energie eine Notfallstromversorgung für einen Motor 28 des Schmierstofffördergeräts 2 bereitgestellt werden. Die Energieübertragung kann beispielsweise mittels einer Verkabelung 30 erfolgen.

Insgesamt kann mit dem erfindungsgemäßen Schmiersystem ein weitgehend autarkes Schmiersystem bereitgestellt werden, dessen einzelne und oft schwer zugängliche Komponenten direkt mit selbst erzeugter Energie versorgt werden können. Da in Schmiersystemen eine Vielzahl von Elementen mit sich bewegenden Teilen vorhanden sind, ist genügend Möglichkeit gegeben, Energie mittels beispielsweise Piezoelementen oder induktiven Elementen zu erzeugen. Beispielhaft ist auch möglich, die Schmierstoffleitung zumindest abschnittsweise aus einem elastischen Material auszugestalten, so dass bei pulsierenden Druckstößen des durch die Schmierstoffleitung geführten Schmierstoffs ein elastisches Ausdehnen und Zusammenziehen der Schmiermittelleitung erzeugt wird, was wiederum ein sich bewegendes Element darstellt, das mit einem Energieerzeugungselement zusammenwirkt. Insbesondere die bei Schmiersystemen übliche pulsierende Schmierstoffförderung stellt somit an sich selbst schon eine Bewegung bereit, die zur Energieerzeugung genutzt werden kann.

### Bezugszeichenliste

- 1: Schmiersystem
- 2: Schmierstofffördereinrichtung
- 4: Schmierstoffleitung
- 6: zu schmierende Stelle
- 8: Schmierstoffverteilvorrichtung
- 10: Sensoreinheit integriert
- 12, 13, 14: Kolben
- 16, 17, 18, 19: Energieerzeugungselemente
- 20: Sensor funktional zugeordnet
- 22: Signalübertragungsvorrichtung
- 24: Steuergerät
- 26: Energiespeichereinheit
- 28: Motor
- 30: Kabel

## Patentansprüche

1. Schmiersystem (1) zum Versorgen mindestens einer Schmierstelle (6) mit Schmierstoff, wobei das Schmiersystem mindestens eine Schmierstoffversorgungsleitung (4) und mindestens eine Schmiersystemkomponente (2, 4, 8, 10, 20) aufweist, die mit der Schmierstoffleitung (4) in Verbindung steht, wobei die Schmiersystemkomponente (2, 4, 8, 10, 20) und/oder die Schmierstoffleitung (4) mindestens ein sich bewegendes Element (12, 13, 14) aufweist,
**dadurch gekennzeichnet, dass**
das Schmiersystem (1) weiterhin mindestens ein Energieerzeugungselement (16, 17, 18, 19) aufweist, das mit dem sich bewegenden Element (12, 13, 14) zusammenwirkt und über die Zusammenwirkung mit dem sich bewegenden Element (12, 13, 14) eine von dem Schmiersystem (1) verwendbare elektrische Energie erzeugt, wobei das Energieerzeugungselement (16, 17, 18, 19) eine Energie für einen Betrieb der mindestens eine Schmiersystemkomponente (2, 4, 8, 10, 20) bereitstellt;
wobei das sich bewegende Element (12, 13, 14) ein Kolben (12, 13, 14) ist oder einem Kolben zugeordnet ist; und/oder eine Membran ist oder einer Membran zugeordnet ist; und/oder ein sich elastisch ausdehnender und zusammenziehender Schlauch einer Schmierstoffleitung ist.

2. Schmiersystem (1) nach Anspruch 1, wobei die Schmiersystemkomponente
eine Schmierstofffördervorrichtung (2), insbesondere eine Schmierstoffpumpe;
und/oder
eine Schmierstoffverteilvorrichtung (8), insbesondere ein Einleitungsverteiler, ein Zweileitungsverteiler, ein Mehrleitungsverteiler, ein Progressivverteiler, eine Mengenbegrenzeinheit, eine Mengendrosseleinheit, eine Schmierstoffdosiereinheit; und/oder
eine Schmierstoffsystemüberwachungsvorrichtung (10, 20), insbesondere ein Druckschalter, ein Füllstandschalter, ein Strömungssensor, ein Kolbensensor; und/oder
ein Ventil ist.

3. Schmiersystem (1) nach einem der vorhergehenden Ansprüche, wobei das Energieerzeugungselement (16, 17, 18, 19) ein Piezoelement (16, 17) und/oder ein induktives Element (18, 19) ist.

4. Schmiersystem (1) nach einem der vorhergehenden Ansprüche, wobei das Schmiersystem (1) weiterhin mindestens ein Sensorelement (10, 20) aufweist, das mit der von dem Energieerzeugungselement (16, 17, 18, 19) erzeugten Energie versorgt ist.

5. Schmiersystem (1) nach Anspruch 4, wobei das Energieerzeugungselement (16, 17, 18, 19) das mindestens eine Sensorelement (10, 20) derart mit Energie versorgt, dass das Sensorelement (10, 20) befähigt ist, mindestens eine Erfassungsgröße zu detektieren.

6. Schmiersystem (1) nach einem der vorhergehenden Ansprüche, wobei das Schmiersystem (1) eine Signalübertragungsvorrichtung (22) aufweist, die dazu ausgelegt ist, drahtlos ein von einer Schmiersystemkomponente (2, 4, 8, 10, 20, 24) bereitgestelltes Signal zu übermitteln und/oder zu empfangen, wobei die Signalübertragungsvorrichtung (22) energetisch mittels der von dem Energieerzeugungselement (16, 17, 18, 19) erzeugten Energie versorgt ist; und/oder
wobei das Schmiersystem (1) mindestens ein Sensorelement (10, 20) aufweist, und das mindestens eine Sensorelement (10, 20), eine Signalübertragungsvorrichtung (22) aufweist, die dazu ausgelegt ist, drahtlos ein von dem Sensorelement (10, 20) detektiertes Signal zu übermitteln, wobei die Signalübertragungsvorrichtung (22) energetisch mittels der von dem Energieerzeugungselement (16, 17, 18, 19) erzeugten Energie versorgt ist.

7. Schmiersystem (1) nach einem der vorhergehenden Ansprüche, wobei das Schmiersystem (1) weiterhin mindestens eine Energiespeichervorrichtung (26) aufweist, die dem Energieerzeugungselement (16, 17, 18, 19) zugeordnet ist und die Energie, die von dem Energieerzeugungselement (16, 17, 18, 19) erzeugt wurde, speichert.

8. Schmiersystem (1) nach Anspruch 7, wobei die Energiespeichervorrichtung (26) mit mindestens einer Schmiersystemkomponente (2, 4, 8, 10, 20) und/oder mit mindestens einem Sensorelement (10, 20) verbunden ist, um die Schmiersystemkomponente (2, 4, 8,) und/oder das Sensorelement (10, 20) mit Energie zu versorgen.

## Claims

1. Lubrication system (1) for supplying at least one location point (6) with lubricant, wherein the lubrication system comprises at least one lubricant supply line (4) and at least one lubrication system component (2, 4, 8, 10, 20) connected to the lubricant line (4), the lubrication system component (2, 4, 8, 10, 20) and/or the lubricant line (4) comprising at least one moving element (12, 13, 14),
**characterized in that**
the lubrication system (1) additionally comprises at least one energy generation element (16, 17, 18, 19) that interacts with the moving element (12, 13, 14) and, by way of the interaction with the moving element (12, 13, 14), generates an electrical energy that may be used by the lubrication system (1), the energy generation element (16, 17, 18, 19) providing an energy for operating the at least one lubrication system component (2, 4, 8, 10, 20);
wherein the moving element (12, 13, 14) is a piston (12, 13, 14) or is associated with a piston; and/or is a diaphragm or is associated with a diaphragm; and/or is an elastically expanding and contracting hose of a lubricant line.

2. Lubrication system (1) according to Claim 1, wherein the lubrication system component is a lubricant delivery apparatus (2), in particular a lubricant pump; and/or
a lubricant distribution apparatus (8), in particular a single-line distributor, a dual-line distributor, a multi-line distributor, a progressive distributor, a flow limiter unit, a flowmeter unit, a lubricant metering unit; and/or
a lubricant system monitoring apparatus (10, 20), in particular a pressure switch, a fill level switch, a flow sensor, a piston sensor; and/or
a valve.

3. Lubrication system (1) according to either of the preceding claims, wherein the energy generation element (16, 17, 18, 19) is a piezo element (16, 17) and/or an inductive element (18, 19).

4. Lubrication system (1) according to one of the preceding claims, wherein the lubrication system (1) additionally comprises at least one sensor element (10, 20) that is supplied with the energy generated by the energy generation element (16, 17, 18, 19).

5. Lubrication system (1) according to Claim 4, wherein the energy generation element (16, 17, 18, 19) supplies the at least one sensor element (10, 20) with energy in such a way that the sensor element (10, 20) is rendered able to detect at least one detection variable.

6. Lubrication system (1) according to one of the preceding claims, wherein the lubrication system (1) comprises a signal transmission apparatus (22) that is designed to wirelessly convey and/or receive a signal provided by a lubrication system component (2, 4, 8, 10, 20, 24), the signal transmission apparatus (22) being supplied with energy by means of the energy generated by the energy generation element (16, 17, 18, 19); and/or
wherein the lubrication system (1) comprises at least one sensor element (10, 20), and
the at least one sensor element (10, 20) comprises a signal transmission apparatus (22) that is designed to wirelessly convey a signal detected by the sensor element (10, 20), the signal transmission apparatus (22) being supplied with energy by means of the energy generated by the energy generation element (16, 17, 18, 19) .

7. Lubrication system (1) according to one of the preceding claims, wherein the lubrication system (1) additionally comprises at least one energy storage apparatus (26) that is associated with the energy generation element (16, 17, 18, 19) and stores the energy that was generated by the energy generation element (16, 17, 18, 19) .

8. Lubrication system (1) according to Claim 7, wherein the energy storage apparatus (26) is connected to at least one lubrication system component (2, 4, 8, 10, 20) and/or to at least one sensor element (10, 20) in order to supply the lubrication system component (2, 4, 8) and/or the sensor element (10, 20) with energy.

## Revendications

1. Système de lubrification (1) permettant d'alimenter au moins un point de lubrification (6) en lubrifiant, le système de lubrification présentant au moins une conduite d'alimentation en lubrifiant (4) et au moins un composant de système de lubrification (2, 4, 8, 10, 20) qui est en communication avec la conduite de lubrifiant (4), le composant de système de lubrification (2, 4, 8, 10, 20) et/ou la conduite de lubrifiant (4) présentant au moins un élément en mouvement (12, 13, 14),
**caractérisé en ce que** le système de lubrification (1) présente en outre au moins un élément de production d'énergie (16, 17, 18, 19) qui coopère avec l'élément en mouvement (12, 13, 14) et produit par le biais de la coopération avec l'élément en mouvement (12, 13, 14) de l'énergie électrique utilisable par le système de lubrification (1), l'élément de production d'énergie (16, 17, 18, 19) fournissant de l'énergie pour un fonctionnement du au moins un composant de système de lubrification (2, 4, 8, 10, 20) ;
dans lequel l'élément en mouvement (12, 13, 14) est un piston (12, 13, 14) ou est associé à un piston ; et/ou est une membrane ou est associé à une membrane ; et/ou est un tuyau d'une conduite de lubrifiant, se dilatant et se contractant de manière élastique.

2. Système de lubrification (1) selon la revendication 1, dans lequel le composant de système de lubrification est
un dispositif de refoulement de lubrifiant (2), en particulier une pompe à lubrifiant ; et/ou
un dispositif de distribution de lubrifiant (8), en particulier un distributeur à voie unique, un distributeur à deux voies, un distributeur à voies multiples, un distributeur progressif, une unité de limitation de débit, une unité de restriction de débit, une unité de dosage de lubrifiant ; et/ou
un dispositif de surveillance de système de lubrification (10, 20), en particulier un interrupteur à pression, un interrupteur de niveau, un capteur de débit, un capteur de piston ; et/ou
un clapet.

3. Système de lubrification (1) selon l'une quelconque des revendications précédentes, dans lequel l'élément de production d'énergie (16, 17, 18, 19) est un élément piézoélectrique (16, 17) et/ou un élément inductif (18, 19).

4. Système de lubrification (1) selon l'une quelconque des revendications précédentes, dans lequel le système de lubrification (1) présente en outre au moins un élément capteur (10, 20) qui est alimenté par l'énergie produite par l'élément de production d'énergie (16, 17, 18, 19).

5. Système de lubrification (1) selon la revendication 4, dans lequel l'élément de production d'énergie (16, 17, 18, 19) alimente ledit au moins un élément capteur (10, 20) en énergie de telle sorte que l'élément capteur (10, 20) est en mesure de détecter au moins une grandeur de détection.

6. Système de lubrification (1) selon l'une quelconque des revendications précédentes, dans lequel le système de lubrification (1) présente un dispositif de transmission de signal (22) qui est conçu pour émettre et/ou recevoir sans fil un signal fourni par un composant de système de lubrification (2, 4, 8, 10, 20, 24), le dispositif de transmission de signal (22) étant alimenté sur le plan énergétique au moyen de l'énergie produite par l'élément de production d'énergie (16, 17, 18, 19) ; et/ou
le système de lubrification (1) présentant au moins un élément capteur (10, 20), et ledit au moins un élément capteur (10, 20) présente un dispositif de transmission de signal (22) qui est conçu pour transmettre sans fil un signal détecté par l'élément capteur (10, 20), le dispositif de transmission de signal (22) étant alimenté sur le plan énergétique au moyen de l'énergie produite par l'élément de production d'énergie (16, 17, 18, 19).

7. Système de lubrification (1) selon l'une quelconque des revendications précédentes, dans lequel le système de lubrification (1) présente en outre au moins un dispositif de stockage d'énergie (26) qui est associé à l'élément de production d'énergie (16, 17, 18, 19) et stocke l'énergie qui a été produite par l'élément de production d'énergie (16, 17, 18, 19).

8. Système de lubrification (1) selon la revendication 7, dans lequel le dispositif de stockage d'énergie (26) est relié à au moins un composant de système de lubrification (2, 4, 8, 10, 20) et/ou à au moins un élément capteur (10, 20) pour alimenter le composant de système de lubrification (2, 4, 8,) et/ou l'élément capteur (10, 20) en énergie.
